# EUROPEAN PATENT SPECIFICATION

(11) **EP 0 429 959 B1**
(45) Date of publication and mention of the grant of the patent: **05.02.1997**
(21) Application number: 90121813.1
(22) Date of filing: 14.11.1990
(51) Int. Cl.: G05D 23/20, B29C 47/92

(54) **Apparatus for controlling a heating temperature**
Vorrichtung zur Regelung einer Heiztemperatur
Dispositif de réglage d'une température de chauffe

(30) Priority: 24.11.1989 JP 305480/89
(43) Date of publication of application: 05.06.1991
(73) Proprietor: TOSHIBA KIKAI KABUSHIKI KAISHA, Tokyo-To (JP)
(72) Inventor: Katsumata, Hirofumi, c/o Numazu Jigyosho, Numazu-shi, Shizuoka-ken (JP); Fujie, Hedeo, c/o Numazu Jigyosho, Numazu-shi, Shizuoka-ken (JP); Tomikawa, Kazuto, c/o Numazu Jigyosho, Numazu-shi, Shizuoka-ken (JP); Nagakura, Yasuhiko, c/o Numazu Jigyosho, Numazu-shi, Shizuoka-ken (JP)
(74) Representative: Grünecker, Kinkeldey, Stockmair & Schwanhäusser Anwaltssozietät

(56) References cited:
- WO-A-80/02871
- US-A- 4 430 698
- SIEMENS ENERGY & AUTOMATION. vol. 9, no. 4, July 1987, BERLIN DE pages 16 - 18; BARTHEL ET AL: 'self- optimizing temperature controllers reduce commissioning time and costs'
- REVIEW OF SCIENTIFIC INSTRUMENTS. vol. 59, no. 6, June 1988, NEW YORK US pages 1001-1003; CHAN:'simple overshoot-suppressed digital proportional-integral derivative temperature controller'
- PATENT ABSTRACTS OF JAPAN vol. 12, no. 157 13 May 1988 & JP-A-62 275 730 (SUMIMOTO HEAVY IND LTD) 30 November 1987

## Description

This invention is broadly concerned with an apparatus for controlling the heating temperature of an object as defined in the preamble part of claim 1. Such a conventional control device is known for example from Review of Scientific Instruments, June 1988, pages 1001 to 1003 having a reset mechanism implemented in the controller to reduce an overshoot caused by step changes of the set point temperature. Such device is intended particularly to be used at a resin heated portion in an injection mold machine or an extruder.

A conventional heating device has been employed in an injection mold machine, an extruder, and the like for melging a resin material. An electric heater is generally used as a typical heating device to conduct a fine control, depending upon a sort of the resin and a molding condition.

WO 80/02871 discloses to a temperature controller in a extruder system having to two thermocouples for sensing respectively the temperature of the inner surface of a barrel and the temperature of a shell with heat exchanger elements surrounding the barrel. The problem to be solved in this reference is that there usually ixists a difference between the actual operating temperature and the set point temperature adjusted by an operator. When the barrel temperature is equal to the actual set point temperature, the actual error is zero. Unless the actual error exceeds an alarm bandwidth, an automatic reset correction will not be made.

If the controller undertakes a corrective "reset" action, a "control setpoint" signal is derived representing a temperature above the actual setpoint. As a result of the control setpoint, control signals are output to the heater controls to cause the shell to be further heated. An analog corrective control is performed during a cooling process by providing a lower control setpoint and the actual setpoint thus bringing the temperature in the shell closer to the desired operation temperature.

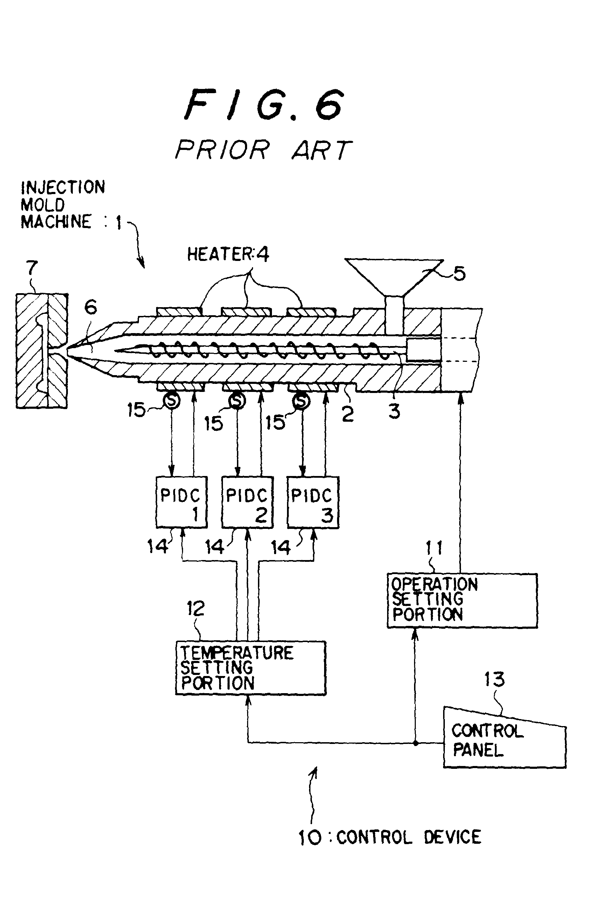

Another example is schematically illustrated in FIG. 6. An injection mold machine 1 consists of a barrel 2, a screw 3 disposed at the inside of the barrel 2 so as to align its axle with that of the barrel 2, and an electric band heater 4 on the peripheral surface of the barrel 2. In an operation of the machine 1, a resin pellet material put into a hopper 5 is transmitted through the barrel 2 while being heated and melted by the heater 4, and while being compressed and kneaded by the screw 3. The molten material is thus extruded from a nozzle 6 of the barrel 2 and subsequently injected into a die 7 to be molded.

Such a injection mold machine 1 is controlled by a control device 10. The control device 10 is of the function to synthetically control a rotating operation of the screw 3 and a heating temperature of the heater 4. The device 10 includes a operation setting portion 11 and a temperature setting portion 12, for presetting a certain state of the injection mold machine 1, and a control panel 13 for manual control by an operator. The temperature setting portion is to be connected with PID controllers 14 to regulate an electric power for heaters 4 and sensors 15 to detect a real temperature of the barrel 2.

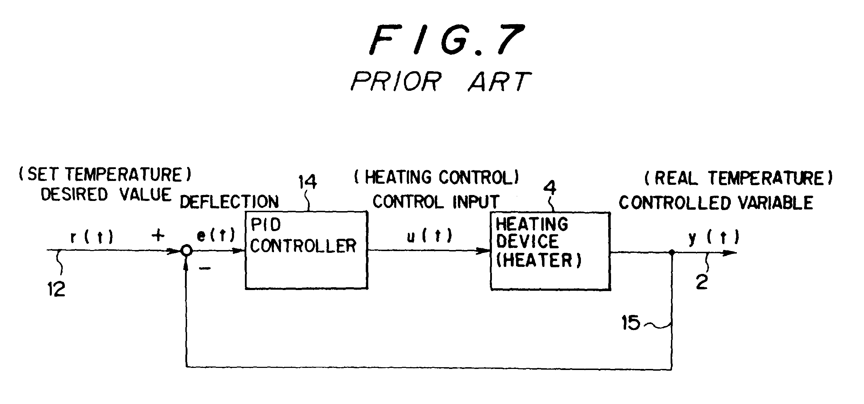

A temperature control by the control device 10 can be schematically described by the block diagram as shown in FIG. 7. In the drawing, denoted by a desired value r(t) is a set temperature of the temperature setting portion 12, and denoted by a control input u(t) is a heating control from the PID controller 14 to the heater 4. Denoted by a controlled variable y(t) means a real temperature of the barrel 2 based on the heating control and is changeable in response to the barrel 2 as an object to be heated and sorts of material resins fed into the barrel 2. The real temperature of the barrel 2 detected by the sensor 15 is negatively fed back to an input of the PIP controller 14, thereby so-called feedback control can be carried out so as to decrease a deflection e(t) of a set temperature and real temperature. Accordingly, the barrel 2 is set at a predetermined set temperature by the heater 4.

The conventional apparatus shown in FIG. 6 has three lines each consisting of the heater 4, the sensor 15, and the controller 14 toward three portions of the barrel 2; a base portion, a middle portion, and a forward portion. These lines are respectively controlled at a certain set temperature by the temperature setting portion 12 to conduct a zone control of the barrel 2.

It is known that if the temperature of a material resin is low, its moldability is likely to decline, while it is high, the decomposition shall be caused. Hence, a preferable temperature control of the barrel 2 is necessary for executing a desirable molding under a less temperature fluctuation.

However, the conventional injection mold machine 1 can not prevent a delay of the temperature control in response to some alterations of conditions when molding. That is because the feedback control such as the PID control is employed for the control device 10, the heating control for the heater 4 is always done after detecting some change of the temperature of the barrel 4. The fluctuation of the temperature becomes rather severe due to the delay of the temperature control, so that the resin in the barrel 2 is not melted enough or decomposed owing to an excess heating.

Moreover, when changing the set temperature of the injection mold machine 1, or when changing the operation condition of the machine 1, a slight deviation of the real temperature of the barrel 2 shall be caused.

This is because while heating up the temperature of the barrel 2 with no resin material therein, the temperature is relatively easy to be changed with small quantity of heat. But, under an operation in which the resin fed into the barrel 2 is melted and not extruded, it is necessary for changing the temperature to apply much quantity of heat toward the barrel 2. In an advanced operation, a molding cycle operation, in which the molten resin is continuously melted and extruded from the barrel 2, so much quantity of heat is necessary to process the resin material successively fed into the barrel 2. Otherwise, necessary quantity of heat can be changed depending upon an operation cycle of the machine 1.

Hence, when shifting the operation from the preparation step to the molding cycle operation, necessary quantity of heat hikes up and the temperature of the barrel 2 thus decreases. Under the molding cycle operation which needs relatively large quantity of heat, the fluctuation of the temperature tend to be worse due to the delay of heating control, hence many fault moldings shall be produced.

The object of the present invention is to provide an apparatus for accurately and securely controlling a heating temperature in response to some fluctuations of temperature depending on states of operation of the machine such as the injection mold machine mentioned before.

This object is solved by an apparatus for controlling the temperature of an object to be heated comprising the features of patent claim 1.

Preferred embodiments are subject to various dependent claims.

In the embodiments of the apparatus, several kinds of heaters may be used as the heating device, some of injection mold machines and so on may be applicable to the object to be heated by the heater, and some of operation control device of the injection mold machine may be applicable to the control device.

Objects to be controlled are an operation state of the objects to be heated, a heating condition done by the heating device, and other elements which could influence the temperature of the object to be heated.

As the condition compensating device, several types may be employed, for example, compensation inputs are preliminary stored in the form of a function or a data-table to comply with anticipated resets and a suitable compensation input is output after detecting a fact of a reset by the control device.

According to the present invention, the mentioned control device controls the heating condition of the heating device and the operation state of the object to be heated in response to a reset to thereby operate the object to be heated in a predetermined manner and keep the desired set temperature by the heating device.

Once a set condition of the control device is reset, the heating condition for heating the object to be heated must be changed due to the change of the operation state and the like after the reset condition. In this moment, the condition compensating device apply a compensation input based on the reset condition in the control device to the heating device in order to accommodate to the better heating condition.

Accordingly, the heating device is directly adjusted into the better heating condition in response to a reset condition in the control device. Hence, the inevitable temperature fluctuation caused by the control device can be minimized as to achieve the mentioned object of the present invention with quick and accurate temperature control.
FIG. 1 is a block diagram showing a entire construction of a preferable embodiment according to the present invention;
FIG. 2 is a block diagram showing how the apparatus described in FIG. 1 is controlled:
FIG. 3 is a graphical representation when operating the apparatus in FIG. 1;
FIGs. 4 and 5 each is a graphical representation showing a timing of setting order of a compensation input:
FIG. 6 is a block diagram entirely showing a conventional construction with reference to the present invention;
FIG. 7 is a block diagram showing how the conventional apparatus is controlled; and
FIG. 8 is a graphical representation showing a control example based on the conventional apparatus.

The preferred embodiment of the present invention will hereunder be described with reference to the drawings.

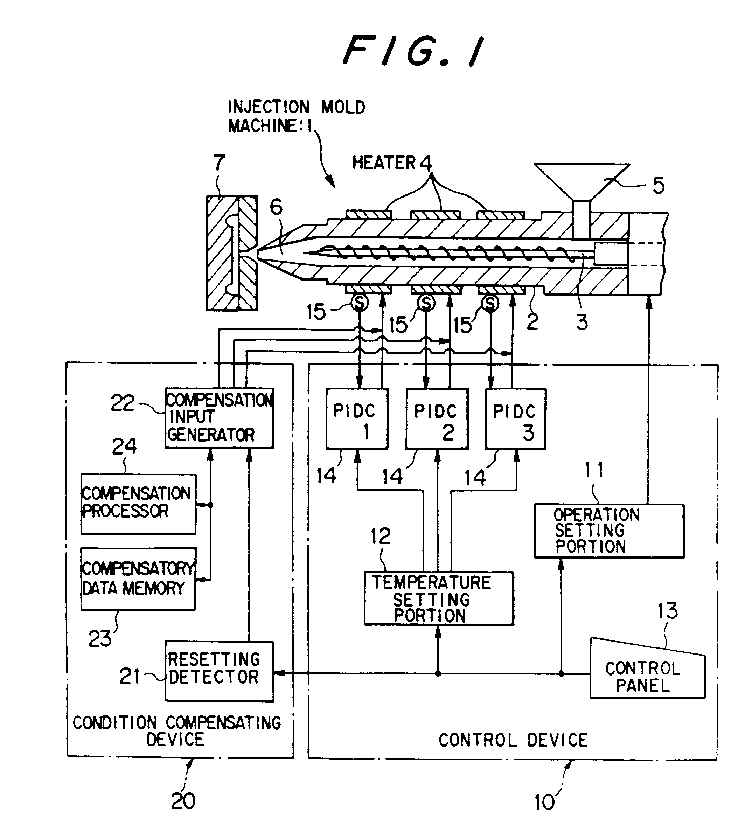

An apparatus for controlling a heating temperature which is applied to an injection mold machine according to the present invention is schematically shown in FIG. 1. The injection mold machine is denoted by the numeral 1 as the object to be heated. Denoted by 4 is a heater as the heating device. Denoted by 10 is a control device to control these devices. In these devices, the injection mold machine 1 and the control device 10 are the same as that in FIG. 6. Incidentally, in the description of the following embodiment, the same reference numerals will be used to designate the same or similar components as those in the conventional example, so that description will be omitted or simplified.

The control device 10 is provided with a condition compensating device 20 with reference to the present invention.

The condition compensating device 20 has a function to adjust the heating condition of the heater 4 by issuing a compensation input in response to a reset in the control device 10. The device 20 consists of a resetting detector 21, a compensation input generator 22, a compensatory data memory 23, and a compensation processor 24.

The resetting detector 21 receives a command for resetting temperature which is put out from a control panel 13 and put into a temperature setting portion 12 and a command toward a operation setting portion 11 for changing an operation state of the injection mold machine 1. In the resetting detector 21, some elements of causing a fluctuation of temperature of a barrel 2 are preliminary held. Hence, the resetting detector 21 detects the command which qualifies the elements preliminary held therein, turning on the compensation input generator 22.

The compensation input generator 22 investigates the command input to the resetting detector 21, issuing an adjusted heating quantity for the heater 4 which is determined by the compensatory data memory 23 and the compensation processor 24.

The compensatory data memory 23 stores in the form of a function or a data-table, for example: ratios of necessary quantity of heat in the barrel 2 at each state of the operation of the injection mold machine 1, e.g. the idling operation, the ordinary running operation, and the molding cycle operation; ratios of necessary quantity of heat in response to the molding cycle speed; and ratios of necessary quantity of heat in response to the set temperature or the fluctuation of the temperature. Accordingly, the best necessary quantity of heat for the barrel 2 can be obtained in conformity with the state of the injection mold machine 1.

The compensation processor 24 compares the present necessary quantity of heat for the injection mold machine which issued by the compensatory data memory 23 with the necessary quantity of heat when a reset is done by the control device 10, calculating the best adjusted quantity of heat for the heater 4.

The adjusted quantity of heat from the condition compensating device 20 is added to the output for the heater 4 by the control device 10 as the compensation input to preliminary compensate the probable fluctuation of temperature after resetting.

The compensatory data memory 23 and the compensation processor 24 are arranged as to obtain the suitable compensation input, which is preparatory decided by some investigations or testings, when conducting a reset of the injection mold machine 1.

How the compensation input are decided in response to a reset by the control device 10 is typically described hereunder.

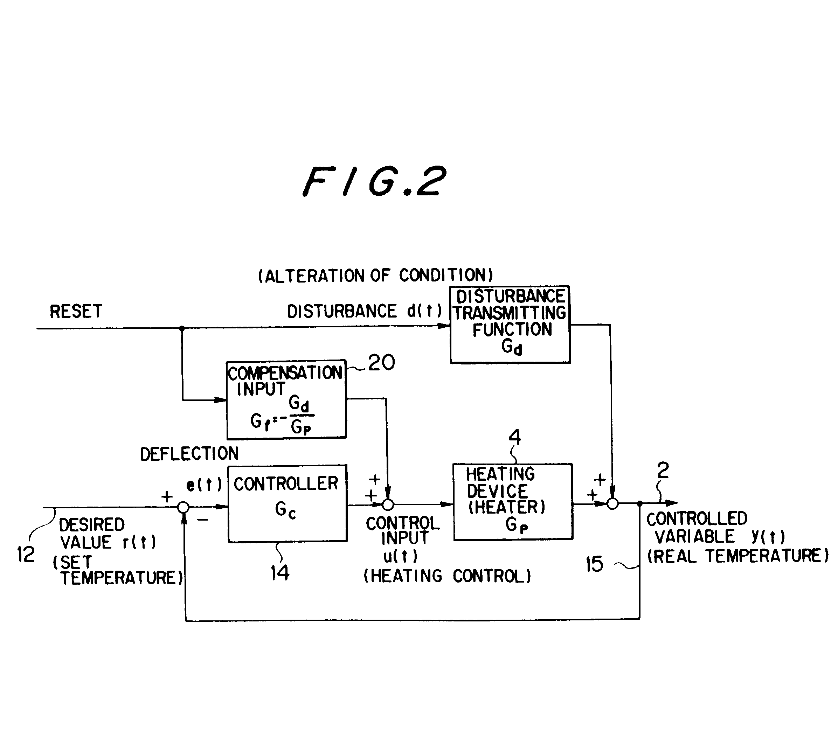

The temperature control by the control device 10 and the condition compensating device 20 is described in the block diagram as in FIG. 2. In the drawing, denoted by a desired value r(t) is a set temperature of the temperature setting portion 12, and denoted by a control input u(t) is a heating control from the PID controller 14 to the heater 4. Denoted by a controlled variable y(t) means a real temperature of the barrel 2 based on the heating control and is changeable in response to the barrel 2 as an object to be heated and sorts of material resins fed into the barrel 2. The real temperature of the barrel 2 detected by the sensor 15 is negatively fed back to an input of the PID controller 14, thereby so-called feedback control can be carried out so as to decrease a deflection e(t) of a set temperature and real temperature. Accordingly, the barrel 2 is set at a predetermined set temperature by the heater 4.

The temperature fluctuation of the barrel 2 depending upon the reset by the control device 10 may influence, as a disturbance d(t), the real temperature of the barrel 2. The compensation input based on the reset is correspondingly input from the condition compensating device 20 to the heater 4.

If a transfer function of PID controller 14 is expressed with Gc, a transfer function of the heating device is expressed with Gp, a transfer function of the disturbance is expressed with Gd, a transfer function of the compensation input is expressed with Gf, a transfer function Gf being expressed by -Gd/Gp, the temperature change of the heater 4 owing to the compensation input can be described by the formula; Gf x Gp = -Gd, hence the disturbance transfer function Gd is canceled. In the end, the compensation input Gf = -Gd / Gp can be determined by the transfer functions of the disturbance Gd and of the heating device Gp.

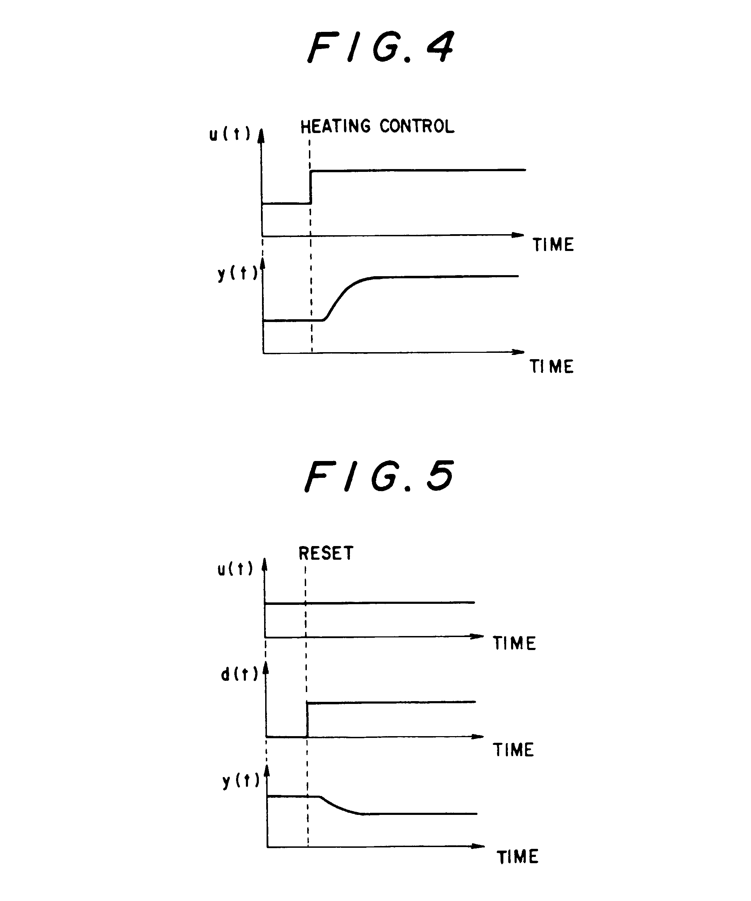

The transfer function of the heating device Gp can be determined as follows. The control input U(t), the controlled variable y(t), and the disturbance d(t) are transformed by the Laplace transform and expressed by U(s), Y(s), and D(s), the character s being the Laplacean. As shown in FIG. 4, when stepping up the control input u(t) with no feedback, The controlled variable y(t) is delayed but kept constant. In this end, Y(s) = Gp(s) x U(s) and Gp(s) = Y(s) / U(s), therefore Gp can be determined by Input-output ratio y(t)/u(t) of the heater 4 as the heating device.

The transfer function of the disturbance d(t) can be determined as follows. When the disturbance d(t) has appeared as shown in FIG. 5, such a formula as shown by Y(s) = Gp(s) x U(s) + Gd(s) x D(s) is made. The disturbance d(t) comes out at when resetting, it is always show in the shape of a step whenever the resetting is not undertaken. Assuming that the control input u(t) is kept in flat, Y(s) and Gd(s) can be obtained by formulas; Y(s) = Gd(s) x D(s) , Gd(s) = Y(s) / D(s). The Gd is decided on the ratio; y(t)/d(t) which is compared the real temperature of the barrel 2 with the temperature fluctuation owing to reset.

The practical operation of the mentioned embodiment is shown below.

When the operator set the operation setting portion 11 and the temperature setting portion 12 by the control panel 13, the control device 10 controls the motion of the injection mold machine 1 and the heating cond ition of the heater 4 based on the set. The injection mold device 1 is operated under the situation established by the operation setting portion 11 and kept its temperature constant by the temperature setting portion 12.

Considering that the operator resets the operation state of the machine 1 already set by the operation setting portion 11 or the temperature already set by the temperature setting portion 12, such resetting is firstly detected by the resetting detector 21. The compensation input generator 22 reads the preferable necessary quantity of heat at present and after resetting from the compensatory data memory 23. The compensation Processor 24 calculates the gap of the quantity of heat, so that the temperature of the heater 4 can be controlled. Accordingly, the fluctuation of the quantity of heat at the barrel 2 because of the resetting is made up and thereby the barrel 2 is kept its temperature constant.

According to the present invention, some of following effects may be attained.

The heating control for slight temperature fluctuation of the barrel 2 under the certain resetting can be carried out at the control device 10. Besides, the heating control for rather considerable temperature fluctuation of the barrel 2 because of the resetting can be compensated due to the condition compensating device 20.

Hence,. such the nature of the control device 10 for the feed-back control as the delay of or the fluctuation of the heating control caused by the resett ing can be kept from occurring. The temperature control of the injection mold machine 1 is therefore well controlled quickly and accurately.

The compensation input by the condition compensating device 20 is issued in response to the reset of temperature and of operation state by the control device 10. That is effective for the situation in which the injection mold machine 1 shifts its operation state from the preparation step to the molding cycle operation. The temporary temperature fluctuation can be minimized, so that an insufficient moldability in the injection mold machine 1 and a deterioration of resin can be prevented.

The injection mold machine 1, the heater 4, and the control device 10 each may be a conventional type, and the condition compensating device 20 which is additionally introduced in the present invention is simply constructed to thereby easily utilize the invention for a skilled person in the art.

One operative example of the injection mold machine 1 accorded to the present invention will hereunder be described. In the example, the real temperature of the barrel 2 is measured when the molding cycle operation is started under the stable temperature of the heater 4.

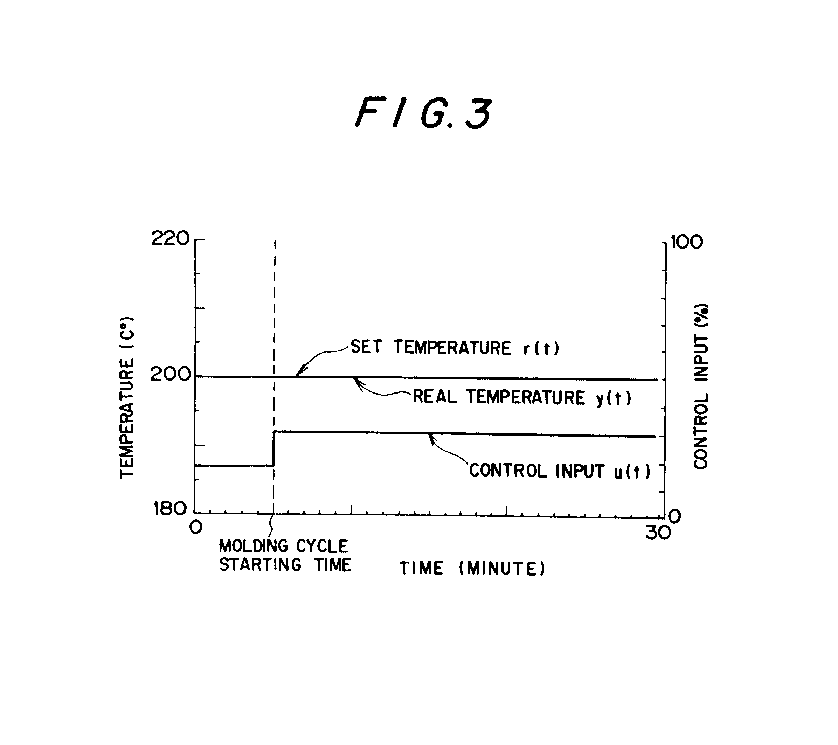

In the FIG. 3, the control input u(t) means a heating control toward the heater 4 in the condition that the maximum heating input is set at 100%. In other words, the control input u(t) is a total of the outputs from the control device 10 and from the condition compensating device 20. The operation input u(t) is once increased in the form of a step in response to the start of the molding cycle operation and succeedingly kept constant. The increase means the heating control by the compensation input issued from the condition compensating device 20 when shifting to the molding cycle operation. Due to the compensation, there is no fluctuation caused by the control device 10. While the operation input u(t) is kept constant, the real temperature y(t) of the barrel 2 is aligned with the set temperature (t). It may be recognized that the accurate control is performed without the temperature fluctuation.

While, one control example, which is not provided with the condition compensating device 20, is hereunder described under the same condition of the operative example already mentioned.

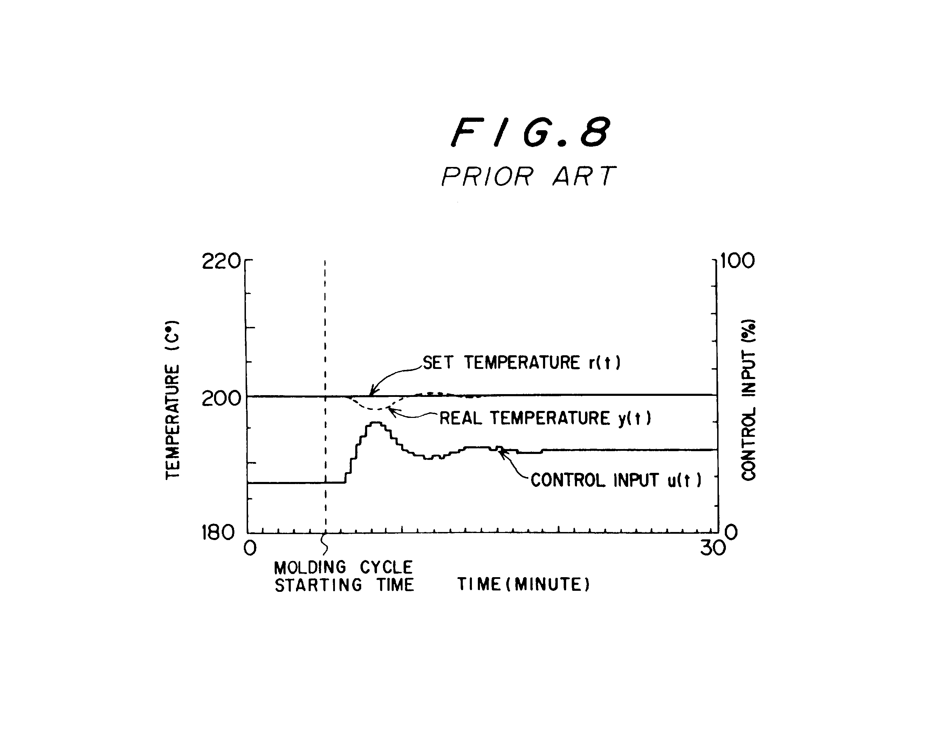

In FIG. 8, the control input u(t) is of the heating control toward the heater 4 from the control device 10, and will not deviate from in a moment when starting the molding cycle operation. However, when the real temperature y(t) of the barrel 2 is considerably decreased, it suddenly hikes up. On the contrary, the real temperature y(t) exceeds over the set temperature r(t) in response to the increase of the control input u(t). In this way, when not using the condition compensating device 20, the heating control for the heater 4 is delayed, the real temperature y(t) of the barrel 2 is fluctuated considerably, and the heating control is also affected to thereby need much time to make the real temperature y(t) stable.

The present invention is not always limited to the above embodiment but the following modifications may be attained.

That is the construction of the condition compensating device 20 may not be limited in the above embodiment. For example, such an alternation measure may be introduced that the compensation input in conformity with various states of resetting is preliminary calculated and stored, and its input is directly read out when resetting. Otherwise, the fundamental nature of temperature is only stored and the temporal calculation is done at when resetting. These modifications are selective. The stored data pattern may be in the form of a function or a data-table.

The states controlled by the control device 10 are not only the operation state of the injection mold machine 1 and the heating condition of the heater 4 but any other state. The system of the control device 10 may be separated. In this situation, it is preferable to join respective control systems for the heater 4 and the barrel 2 into on condition compensating device.

The items to be reset are not only the operation state of the injection mold machine 1 and the temperature of the heater 4 but any item which may affect the temperature of the barrel 2 as to be registered in the condition compensating device 20.

The object to be heated, the heating device, and the control device are not only the injection mold machine 1, the heater 4, and the control device 10 but any types of heating devices and control devices employed in other kinds of injection mold machines, extruders and the apparatus in this invention.

AS mentioned above, according to the apparatus for controlling heating temperature in the present invention, the accurate and stable temperature control may be taken effect at the condition that the temperature fluctuation is caused by the change of the operation state of the object to be heated.

## Claims

1. An apparatus for controlling the temperature of an object to be heated comprising:
a control device (10) comprising a controller (14) for controlling a heating device (4) in a feedback control loop, thereby said controller (14) outputs a control input signal (u(t)) for the heating device,
**characterized by**
a condition compensation means (20) for generating a compensation signal at the output of the controller (14) in response to the detection of an alteration of the operation conditions of the object,
means for adding the compensation signal and the output signal from the controller (14) to provide a compensated control signal at the output of the controller (14), and
means for supplying the compensated control signal as an input signal to the heating device (4).

2. The apparatus according to claim 1, wherein said condition compensating means (20) includes; a resetting detector (21) for detecting a resetting command which is issued from said control device (10) and causes a temperature fluctuation of the object to be heated, a compensatory data memory (23) for storing data of necessary quantity of heat for the object to be heated to comply with the resetting command, a compensation processor (24) for calculating a value of heating control toward the object to be heated with reference to the data of necessary quantity of heat from the compensatory data memory (23), and a compensation input generator (22) for investigating the resetting command and for issuing the value of heating control to the heating device (4).

3. The apparatus according to claim 2, wherein the resetting command controls an operation state of the object to be heated and a heating condition by the heating device (4).

4. The apparatus according to claims 2 or 3, wherein a control input of the heating device (4) is changed in the form of a step on a graphical representation.

5. The apparatus according to one of claims 1 to 4, wherein the data of necessary quantity of heat stored in the compensatory data memory (23) are ratios of the necessary quantity of heat in the form of a function or a data-table.

6. The apparatus according to one of claims 1, to 5, wherein said condition compensating means (20) is of a construction in which the compensation input in conformity with various states of resetting is preliminary calculated and stored, and the input is directly read out when resetting.

## Patentansprüche

1. Einrichtung zum Regeln der Temperatur eines zu erwärmenden Objekts, umfassend:
eine Regeleinrichtung (10), umfassend einen Regler (14) zum Regeln einer Heizeinrichtung (4) in einer Rückkopplungsregelschleife, wobei der Regler (14) ein Regeleingangssignal (u(t)) für die Heizeinrichtung ausgibt,
**gekennzeichnet durch**
eine Zustandskompensationseinrichtung (20) zum Erzeugen eines Kompensationssignals am Ausgang des Reglers (14) im Ansprechen auf die Erfassung einer Änderung der Betriebszustände des Objekts,
eine Einrichtung zum Addieren des Kompensationssignals und des Ausgangssignals des Reglers (14), um ein kompensiertes Regelsignal am Ausgang des Reglers (14) bereitzustellen, und
eine Einrichtung zum Anlegen des kompensierten Regelsignals als Eingangssignal für die Heizeinrichtung (4).

2. Einrichtung nach Anspruch 1, worin die Zustandskompensationseinrichtung (20) umfaßt:
einen Rücksetzdetektor (21) zum Erfassen eines Rücksetzbefehls, welcher von der Regeleinrichtung (10) ausgegeben wird und eine Temperaturänderung des zu erwärmenden Objekts verursacht, einen Speicher (23) für Kompensationsdaten zum Speichern von Daten einer Wärmemenge, die erforderlich ist, um das Objekt nach Maßgabe des Rücksetzkommandos zu erwärmen,
einen Kompensationsprozessor (24) zum Berechnen eines Wertes der Heizregelung in bezug auf das zu erwämende Objekt unter Bezugnahme auf die Daten der erforderlichen Wärmemenge aus dem Speicher (23) für die Kompensationsdaten, und
ein Kompensationseingabegenerator (22) zur Untersuchung des Rücksetzbefehls und zum Ausgeben des Heizregelungswertes für die Heizeinrichtung (4).

3. Einrichtung nach Anspruch 2, worin der Rücksetzbefehl einen Betriebszustand des zu erwärmenden Objekts und einen Heizzustand der Heizeinrichtung (4) regelt.

4. Einrichtung nach Anspruch 2 oder 3, worin eine Regeleingabe für die Heizeinrichtung (4) in einer graphischen Darstellung in Form einer Stufe verändert wird.

5. Einrichtung nach einem der Ansprüche 1 bis 4, worin die Daten über die erforderliche Wärmemenge, welche in dem Speicher (23) für die Kompensationsdaten gespeichert sind, Verhältnisse der erforderlichen Wärmemenge in Form einer Funktion oder einer Datentabelle sind.

6. Einrichtung nach einem der Ansprüche 1 bis 5, worin die Zustandskompensationseinrichtung (20) einen Aufbau besitzt, bei dem die Kompensationseingabe in Übereinstimmung mit verschiedenen Rücksetzzuständen vorläufig berechnet und gespeichert wird und die Eingabe beim Rücksetzen direkt ausgelesen wird.

## Revendications

1. Appareil de commande de la température d'un objet à chauffer, comprenant :
un dispositif de commande (10) comprenant un régulateur (14) pour la commande en boucle d'un dispositif de chauffage (4), ce régulateur (14) émettant un signal d'entrée de commande (u(t)) pour le dispositif de chauffage,
caractérisé par
un moyen de correction de régime (20) pour la production d'un signal de correction à la sortie du régulateur (14) en réponse à la détection d'une modification du régime de fonctionnement de l'objet,
un moyen d'addition du signal de correction et du signal de sortie du régulateur (14) pour la production d'un signal de commande corrigé à la sortie du régulateur (14), et
un moyen d'envoi du signal de commande corrigé comme signal d'entrée au dispositif de chauffage (4).

2. Appareil selon la revendication 1, dans lequel le moyen de correction de régime (20) comporte un détecteur de restauration (21) pour la détection d'une commande de restauration qui est émise par le dispositif de commande (10) et produit une fluctuation de la température de l'objet à chauffer, une mémoire de données correctrices (23) pour la mise en mémoire de données de quantité nécessaire de chaleur pour l'objet à chauffer pour se conformer à la commande de restauration, un processeur de correction (24) pour le calcul d'une valeur de commande de chauffage vers l'objet à chauffer en référence aux données de quantité nécessaire de chaleur extraites de la mémoire de données correctrices (23), et un générateur d'entrée de correction (22) pour l'examen de la commande de restauration et l'envoi de la valeur de commande de chauffage au dispositif de chauffage (4).

3. Appareil selon la revendication 2, dans lequel la commande de restauration commande un état de fonctionnement de l'objet à chauffer et un régime de chauffage par le dispositif de chauffage (4).

4. Appareil selon l'une des revendications 2 et 3, dans lequel une entrée de commande du dispositif de chauffage (4) est changée sous la forme d'un échelon sur une représentation graphique.

5. Appareil selon l'une des revendications 1 à 4, dans lequel les données de quantité nécessaire de chaleur en mémoire dans la mémoire de données correctrices (23) sont des taux de la quantité nécessaire de chaleur sous la forme d'une fonction ou d'une table de données.

6. Appareil selon l'une des revendications 1 à 5, dans lequel le moyen de correction de régime (20) est d'une construction dans laquelle l'entrée de correction en conformité avec divers états de restauration est calculée et mise en mémoire préliminairement et est extraite directement lors de la restauration.
